# DEMANDE DE BREVET EUROPEEN

(11) **EP 0 767 366 A1**
(43) Date de publication de la demande: **09.04.1997**
(21) Numéro de dépôt: 96402064.8
(22) Date de dépôt: 27.09.1996
(51) Int. Cl.: G01M 1/04

(54) **Broche d'entraînement en rotation à montage rapide, et machine comportant une telle broche**

(30) Priorité: 04.10.1995 FR 9511653
(71) Demandeur: MULLER BEM, F-28000 Chartres (FR)
(72) Inventeur: Coetsier, Paul, 77400 Pomponne (FR); Sauzay, Olivier, 28630 Coudray (FR)
(74) Mandataire: Boutin, Antoine

(57) **Abrégé**

Une broche d'entraînement en rotation à montage rapide comporte un arbre creux (10) monté à rotation sur deux paliers (3a, 3b) et une tige (9) de commande traversant ledit arbre creux (10) et déplaçable entre une position de verrouillage et une position de verrouillage. Un ressort élastique précontraint est prévu pour appliquer en permanence la tige de commande (9) dans la première position de verrouillage et un vérin pneumatique (6) est prévu pour agir à l'encontre du ressort (19) et pousser la tige de commande (9) dans la position de déverrouillage. Ce vérin (6) est monté par rapport à l'arbre creux (10) d'entraînement et à la tige de commande (9) selon une disposition analogue à celle d'un arrache-moyeu, c'est-à-dire en tirant sur une conformation (11) solidaire de l'arbre creux (10) d'entraînement pour pousser sur la tige de commande (9) sans exercer aucun effort sur les paliers (3a, 3b).

Application à l'équilibrage de roues de véhicules.

## Description

L'invention est relative à une broche d'entraînement en rotation à montage rapide, du type comportant un arbre creux monté à rotation sur deux paliers espacés et portant à une première extrémité un moyen de lancement et d'entraînement en rotation et à la deuxième extrémité un flasque de montage déterminant un plan de référence et de maintien d'un corps entraîné en rotation ; une tige de commande traversant ledit arbre creux et déplaçable entre deux positions dont la première correspond à la solidarisation dudit corps avec l'arbre d'entraînement en rotation et la deuxième correspond à la libération dudit corps.

L'invention est particulièrement utile pour l'équilibrage de roues de véhicule et la mesure des paramètres physiques nécessaire à cet effet.

L'invention est également relative à une machine, telle qu'une équilibreuse équipée d'une broche d'entraînement en rotation selon l'invention.

Le document US 4 202 213 concerne un appareil pour verrouiller automatiquement des roues de véhicule automobile sur des machines d'équilibrage.

Cet appareil donne généralement satisfaction mais présente l'inconvénient selon lequel l'équipage entraîné en rotation est relativement important et comporte notamment tout ou partie d'un vérin pneumatique de commande de verrouillage actionnant une tige de commande.

Lors d'une coupure d'alimentation en air comprimé, cet appareil n'offre aucune sécurité et déverrouille automatiquement la jante de la roue, ce qui est susceptible d'entraîner des accidents pour le personnel et des avaries pour le matériel.

En outre, la présence d'organes tournants indésirables à une extrémité de l'arbre d'entraînement en rotation introduit des balourds supplémentaires et des erreurs systématiques dans les mesures, ce qui conduit à une mauvaise qualité d'équilibrage.

L'invention a pour but de remédier aux inconvénients de la technique connue, en créant une nouvelle broche à montage rapide, utilisable dans tout type de machine et particulièrement utile comme composant d'une équilibreuse, assurant la sécurité du personnel et fournissant une bonne qualité de mesure.

L'invention a pour objet une broche d'entraînement en rotation à montage rapide notamment pour le montage et le maintien d'une roue à équilibrer sur une équilibreuse, du type comportant un arbre creux monté à rotation sur deux paliers espacés et portant à une première extrémité un moyen de lancement et d'entraînement en rotation et à la deuxième extrémité un flasque de montage déterminant un plan de référence et de maintien de la jante de la roue à équilibrer ou d'un corps entraîné en rotation ; une tige de commande traversant ledit arbre creux et déplaçable entre deux positions dont la première correspond au déplacement d'un moyen de verrouillage de la jante ou du corps sur ledit flasque de montage et la deuxième correspond à l'effacement dudit moyen de verrouillage et à la libération de la jante ou du corps ; un premier moyen élastique précontraint prévu pour appliquer en permanence la tige de commande dans la première position de verrouillage et un deuxième moyen prévu pour agir à l'encontre dudit premier moyen et pousser la tige de commande dans la deuxième position de déverrouillage, caractérisée en ce que le deuxième moyen est monté par rapport à l'arbre creux d'entraînement et à la tige de commande selon une disposition analogue à celle d'un arrache-moyeu, c'est-à-dire en tirant sur une conformation solidaire de l'arbre creux d'entraînement pour pousser sur la tige de commande sans exercer aucun effort sur les paliers.

Selon d'autres caractéristiques de l'invention :
- le premier moyen élastique précontraint est un ressort, le deuxième moyen est un moyen pneumatique, électrique ou hydraulique ;
- le deuxième moyen est monté sensiblement coaxialement à la tige de commande selon un montage flottant, de manière à ne pas être en contact avec la tige de commande lors de la rotation de la broche en première position verrouillée ;
- le deuxième moyen est conformé pour n'exercer aucun effort sur les roulements des paliers ;
- la tige de commande porte à une extrémité ledit moyen de verrouillage déployable et présente à l'autre extrémité une surface d'appui espacée dudit deuxième moyen dans la première position de verrouillage, de manière à empêcher toute influence ou interaction du deuxième moyen sur la rotation de la broche ou des mesures effectuées pendant la rotation de la broche ;
- le deuxième moyen est précontraint dans une position espacée avec un jeu prédéterminé avec l'arbre creux au cours de la rotation de celui-ci ;
- la tige de commande porte une butée, apte à coulisser dans une lumière longitudinale de l'arbre creux entre ladite première position et ladite deuxième position, le premier moyen élastique est précontraint entre cette butée et une conformation solidaire de l'arbre creux.

L'invention a également pour objet une machine ou équilibreuse comportant une broche selon l'une quelconque des revendications précédentes, caractérisée en ce que l'équilibreuse comporte : d'une part, une platine fixe portant les deux paliers espacés sur lesquels est monté à rotation un ensemble comportant l'arbre creux, la tige de commande, le premier moyen élastique précontraint et le moyen de verrouillage déployable et, d'autre part, un support sur lequel est monté ledit deuxième moyen.

Selon d'autres caractéristiques de l'invention :
- ledit deuxième moyen est monté prisonnier sur son support avec un jeu de coulissement prédéterminé dans la direction de déplacement de la tige de commande ;
- le premier moyen élastique précontraint est solidaire en rotation de l'arbre d'entraînement en rotation et entre les deux paliers espacés solidaires de la platine.

L'invention sera mieux comprise grâce à la description qui va suivre donnée à titre d'exemple non limitatif en référence aux dessins annexés dans lesquels :

La figure 1 représente schématiquement une vue de dessus avec coupes partielles radiales d'une broche selon l'invention en position de déverrouillage.

La figure 2 représente schématiquement une vue de dessus d'une broche selon l'invention avec coupes radiales en position de verrouillage.

La figure 3 représente schématiquement une vue en perspective avec arrachement partiel d'une broche selon l'invention.

La figure 4 représente schématiquement une vue partielle agrandie analogue à la figure 2 illustrant le fonctionnement d'une broche selon l'invention.

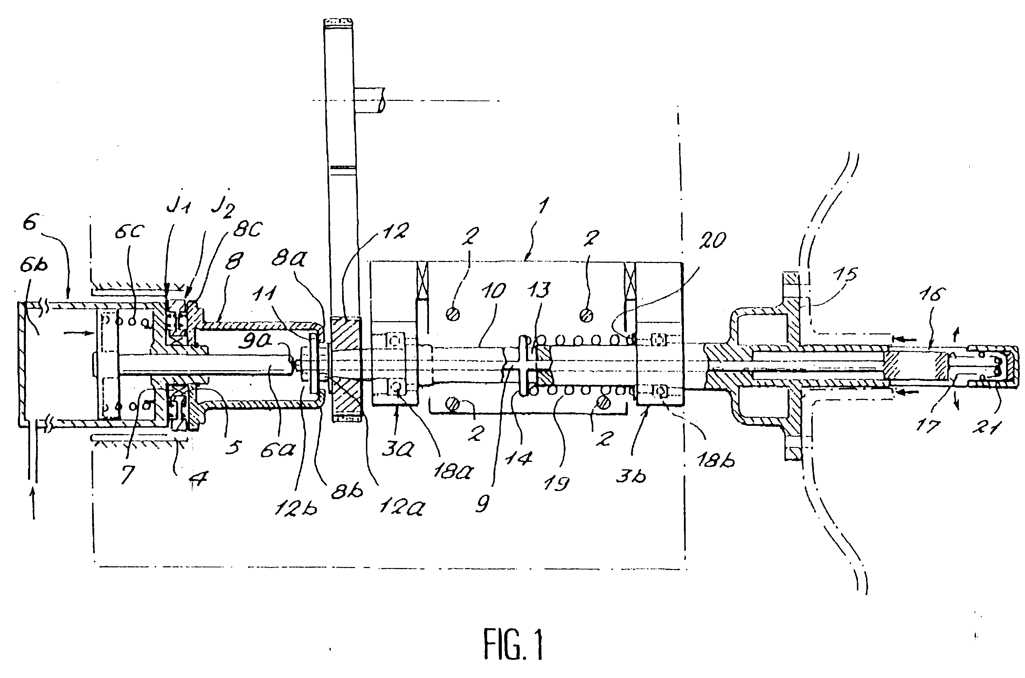

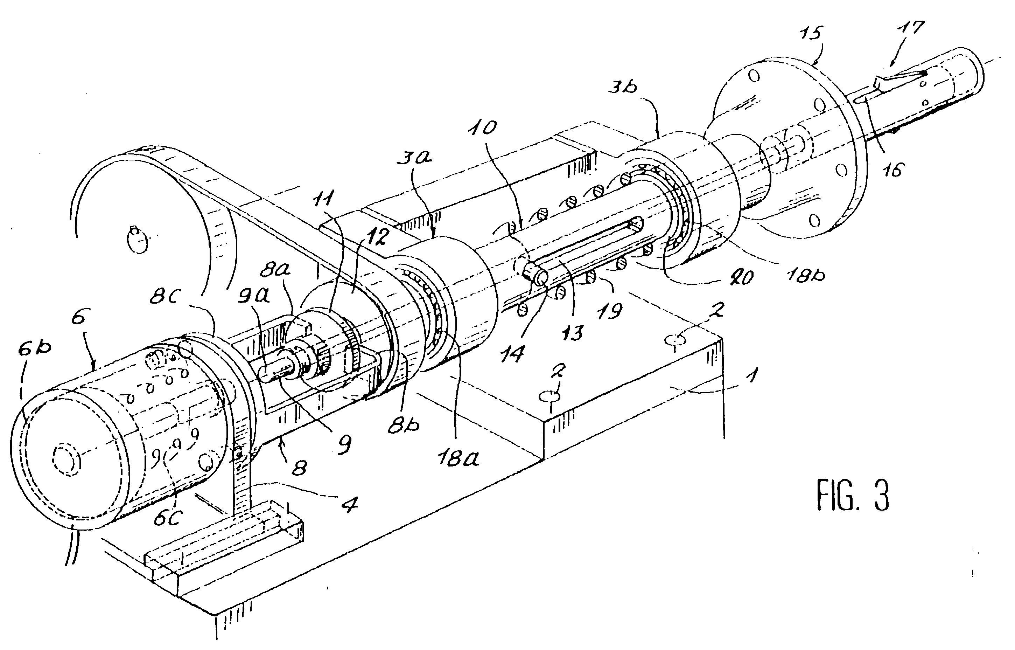

En référence aux figures 1 à 4, les éléments de repères identiques désignent des éléments identiques ou fonctionnellement équivalents.

Une équilibreuse comporte un châssis permettant de fixer à demeure une platine 1 au moyen de boulons 2, de manière à supporter des paliers 3a, 3b espacés l'un de l'autre sur lesquels est monté à rotation un ensemble tournant décrit ci-après. Le châssis de l'équilibreuse porte également un support 4 constitué par une plaque épaisse avec un alésage central 5.

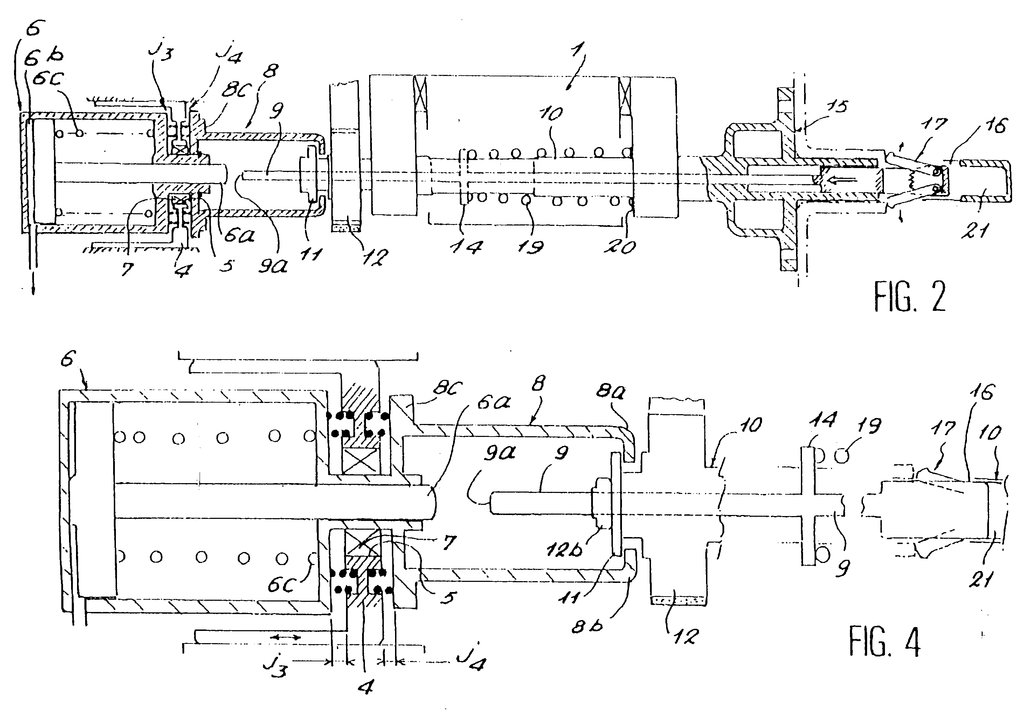

Un vérin pneumatique 6 est monté prisonnier dans cet alésage 5 au moyen d'une douille 7 selon un montage fournissant un jeu de coulissement longitudinal prédéterminé, correspondant à la somme des distances j₁ et j₂ (figure 1) ou j₃ et j₄ (figure 2).

Le vérin 6 est de préférence un vérin pneumatique, mais pourrait également être constitué par un vérin hydraulique, un moyen de traction électrique ou d'autres moyens mécaniques équivalents.

Le corps du vérin 6 est solidaire de la douille 7 et porte un étrier 8 présentant deux griffes d'extrémités 8a, 8b.

Le vérin 6 est par conséquent monté prisonnier par rapport au support 4 solidaire du bâti de l'équilibreuse selon un montage flottant coaxial à l'équipage mobile apte à être entraîné en rotation, de manière à ne pas être en contact avec cet équipage mobile entraîné en rotation dans la position de verrouillage correspondant à la figure 2, et de manière à opérer sur cet équipage mobile à la manière d'un arrache-moyeu dans la position de déverrouillage correspondant à la figure 1.

Sur la figure 1, la tige 6a du vérin appuie sur une tige de commande 9 traversant l'arbre creux 10 d'entraînement en rotation, tandis que l'étrier 8 tire sur le disque 11 solidaire de l'arbre d'entraînement en rotation en étant pris par exemple entre deux écrous 12a et 12b.

Dans l'opération représentée à la figure 1, l'effort de traction de l'étrier 8 sur le disque 11 est transmis par le vérin 6 par l'intermédiaire de la tige 6a du vérin appuyant sur la tige de commande 9. Du point de vue mécanique, aucun effort en provenance du bâti de l'équilibreuse n'est ainsi exercé sur l'arbre d'entraînement en rotation 10 ou sur la tige de commande 9, étant donné que le vérin 6 est monté avec un jeu de coulissement prédéterminé j₁ + j₂ dans le support 4 solidaire du bâti.

En outre, aucun effort n'est transmis aux roulements 18a et 18b du fait que la traction sur l'arbre 10 équilibre la poussée sur la tige de commande 9 : ainsi, même après répétition de nombreux cycles, les roulements 18a et 18b et les paliers 3a et 3b ne subissent aucune contrainte pouvant perturber le bon fonctionnement de la machine.

L'équipage mobile comporte un arbre creux 10 portant le disque 11 fixé au moyen des écrous 12a et 12b, un moyen 12 de lancement et d'entraînement en rotation du genre poulie ou équivalent, une lumière 13 fermée à ses deux extrémités servant de guidage à une butée 14 solidaire de la tige de commande 9, un flasque de montage 15 déterminant un plan de référence et de maintien de la jante d'une roue à équilibrer ou d'un corps entraîné en rotation, et une autre lumière 16 de passage pour le déploiement d'un moyen de verrouillage 17 constitué par deux pinces précontraintes en position ouverte par un ressort.

L'ensemble de cet équipage mobile est monté dans les paliers rotatifs 3a et 3b au moyen par exemple de roulements à billes 18a et 18b.

Un ressort 19 est placé entre une conformation 20 ou un épaulement solidaire de l'arbre creux 10 et la butée 14 solidaire de la tige de commande 9. Le ressort 19 est de préférence un ressort hélicoïdal de compression précontraint de manière à repousser la butée 14 dans la position de la figure 2 correspondant au verrouillage.

Pour passer de la position de la figure 2 correspondant au verrouillage à la position de la figure 1 correspondant au déverrouillage et à la libération de la jante ou du corps en appui sur le flasque 15, il suffit d'alimenter la chambre 6b du vérin pneumatique en air comprimé, de manière à transmettre la traction exercée par l'étrier 8 sur le disque 11 en poussée exercée par la tige 6a du vérin 6 sur la tige de commande 9 de l'équipage mobile.

Dans cette position, le ressort 19 est comprimé par le déplacement de la butée 14 et les pinces du moyen de verrouillage 17 sont poussées dans le logement d'extrémité 21 en se repliant l'une vers l'autre et en s'escamotant à l'intérieur du cylindre géométrique enveloppant l'arbre d'entraînement en rotation 10.

Grâce à l'invention, on obtient ainsi une sécurité absolue pour le personnel du fait que la jante ou le corps en rotation est constamment maintenu en appui par le moyen de verrouillage déployé 17 commandé par la tige 9 soumise à l'action du ressort de compression 19 qui maintient celle-ci dans la position de la figure 2.

De préférence, le vérin 6 est un vérin à rappel par ressort 6c alimenté en air comprimé par un distributeur à commande électrique. Le signal électrique de cette commande est utilisé par un programme de sécurité ou un montage électromécanique équivalent empêchant la rotation de l'arbre d'entraînement 10 lorsque le vérin 6 est alimenté en air comprimé pour effectuer le déverrouillage. Un signal électrique d'interdiction est prévu pour empêcher le déverrouillage en cours de rotation de l'arbre d'entraînement 10.

Avantageusement, le deuxième moyen que constitue le vérin 6 est monté sensiblement co-axialement à la tige de commande 9 selon un montage flottant, de manière à ne pas être en contact avec la tige de commande 9 lors de la rotation de l'équipage mobile en position verrouillée (figure 2). Du fait de ce montage flottant, l'ensemble comprenant le vérin 6 et l'étrier 8 se déplace de lui-même lors du lancement en rotation de l'équipage mobile de manière à ne pas être en contact avec la tige de commande 9 ou le disque 11 de l'arbre 10 d'entraînement en rotation.

L'ensemble du dispositif fonctionne de manière analogue à celle d'un arrache-moyeu, en transmettant l'effort de traction des griffes 8a, 8b de l'étrier 8 sur le disque 11 à la tige de commande 9 par l'intermédiaire du vérin 6 lorsque celui-ci est alimenté en air comprimé à une pression suffisante pour agir à l'encontre du ressort précontraint 19 et pour pousser la tige de commande 9 vers la position de déverrouillage (figure 1).

Le montage de la tige de commande 9 est facilité du fait qu'à l'opposé de l'extrémité portant le moyen de verrouillage 17 déployable se trouve simplement une surface d'appui plane 9a apte à coopérer avec l'extrémité de la tige 6a du vérin 6. La surface d'appui 9a est espacée de la tige 6a du vérin 6 dans la position de verrouillage de la figure 2, ce qui présente l'avantage de ne transmettre aucune influence et aucune interaction en provenance du bâti ou du vérin 6 susceptible d'interférer avec le mouvement de rotation de la broche ou de fausser les mesures effectuées pendant la rotation de la broche.

Avantageusement, le corps du vérin 6 peut être maintenu dans une position espacée de l'équipage mobile par des moyens élastiques appropriés tels que des ressorts disposés de part et d'autre du support 4, entre le cylindre du vérin 6 et la base 8c de l'étrier 8. Le fait de précontraindre en position le deuxième moyen comprenant le vérin 6 avec sa tige 6a et l'étrier 8 fixée à la douille 7 solidaire du cylindre du vérin 6 permet d'assurer que, même après de nombreux cycles de verrouillage et de déverrouillage, ce deuxième moyen se retrouve toujours dans la position de la figure 2 avec conservation des jeux respectifs j₃ et j₄.

L'invention est particulièrement avantageuse lorsqu'elle est appliquée à l'équilibrage de roues de véhicules, mais l'application de l'invention à toute autre sorte de machine-outil, machine d'entraînement, de lancement en rotation d'un corps tournant ne sort pas du cadre de la présente invention.

Dans son application aux équilibreuses, l'invention permet le remplacement d'une broche existante par une broche selon l'invention en raison du fait que le premier moyen élastique 19 précontraint est solidaire de l'arbre 10 d'entraînement en rotation, entre les deux paliers 3a et 3b espacés solidaires de la platine 2 : le diamètre extérieur de l'arbre d'entraînement en rotation est par conséquent du même ordre ou égal à celui des arbres d'entraînement en rotation des broches équilibreuses de l'art antérieur, ce qui permet un échange standard rapide dans le cas où les bâtis sont équipés de platines 1 de fixation identique ou compatible.

L'invention décrite en référence à un mode de réalisation particulier n'y est nullement limitée mais couvre au contraire toute modification de forme et toute variante de réalisation dans le cadre et l'esprit de l'invention : le deuxième moyen peut être actionné à la main au lieu de faire appel à une source d'énergie extérieure ; il s'agit alors d'un système à levier, à excentrique, à bielle et manivelle ou équivalent.

## Revendications

1. Broche d'entraînement en rotation à montage rapide notamment pour le montage et le maintien d'une roue à équilibrer sur une équilibreuse, du type comportant un arbre (10) creux monté à rotation sur deux paliers (3a, 3b) espacés et portant à une première extrémité un moyen (12) de lancement et d'entraînement en rotation et à la deuxième extrémité un flasque de montage (15) déterminant un plan de référence et de maintien de la jante de la roue à équilibrer ou d'un corps entraîné en rotation ; une tige de commande (9) traversant ledit arbre creux (10) et déplaçable entre deux positions dont la première correspond au déplacement d'un moyen de verrouillage (17) de la jante ou du corps sur ledit flasque de montage (15) et la deuxième correspond à l'effacement dudit moyen de verrouillage (17) et à la libération de la jante ou du corps ; un premier moyen élastique (19) précontraint prévu pour appliquer en permanence la tige de commande (9) dans la première position de verrouillage et un deuxième moyen (6, 7, 8) prévu pour agir à l'encontre dudit premier moyen (19) et pousser la tige de commande (9) dans la deuxième position de déverrouillage, le deuxième moyen (6, 7, 8) étant monté par rapport à l'arbre creux (10) d'entraînement et à la tige de commande (9) selon une disposition analogue à celle d'un arrache-moyeu, c'est-à-dire en tirant sur une conformation (11) solidaire de l'arbre creux (10) d'entraînement pour pousser sur la tige de commande (9) sans exercer aucun effort sur les paliers (3a, 3b).

2. Broche selon la revendication 1, caractérisée en ce que le premier moyen élastique (19) précontraint est un ressort et en ce que le deuxième moyen (6, 7, 8) est un moyen pneumatique, électrique ou hydraulique.

3. Broche selon la revendication 1 ou la revendication 2, caractérisée en ce que le deuxième moyen (6, 7, 8) est monté sensiblement coaxialement à la tige de commande (9) selon un montage flottant, de manière à ne pas être en contact avec la tige de commande (9) lors de la rotation de la broche en première position verrouillée (figure 2).

4. Broche selon l'une quelconque des revendications précédentes, caractérisée en ce que le deuxième moyen (6, 7, 8) est conformé pour n'exercer aucun effort sur les roulements (18a, 18b) des paliers (3a, 3b).

5. Broche selon l'une quelconque des revendications précédentes, caractérisée en ce que la tige de commande (9) porte à une extrémité ledit moyen de verrouillage (17) déployable et présente à l'autre extrémité une surface d'appui (9a) espacée dudit deuxième moyen (6, 7, 8) dans la première position de verrouillage, de manière à empêcher toute influence ou interaction du deuxième moyen (6, 7, 8) sur la rotation de la broche ou des mesures effectuées pendant la rotation de la broche.

6. Broche selon l'une quelconque des revendications précédentes, caractérisée en ce que le deuxième moyen (6, 7, 8) est précontraint dans une position espacée avec un jeu prédéterminé avec l'arbre creux (10) au cours de la rotation de celui-ci.

7. Broche selon l'une quelconque des revendications précédentes, caractérisée en ce que la tige de commande (9) porte une butée (14), apte à coulisser dans une lumière longitudinale (13) de l'arbre creux (10) entre ladite première position et ladite deuxième position et en ce que le premier moyen élastique (19) est précontraint entre cette butée (14) et une conformation (20) solidaire de l'arbre creux (10).

8. Equilibreuse comportant une broche selon l'une quelconque des revendications précédentes, caractérisée en ce que l'équilibreuse comporte : d'une part, une platine fixe (1) portant les deux paliers (3a, 3b) espacés sur lesquels est monté à rotation un ensemble comportant l'arbre creux (10), la tige de commande (9), le premier moyen élastique (19) précontraint et le moyen de verrouillage déployable (17) et, d'autre part, un support (4) sur lequel est monté ledit deuxième moyen (6, 7, 8).

9. Equilibreuse selon la revendication 8, caractérisée en ce que ledit deuxième moyen (6, 7, 8) est monté prisonnier sur son support (4) avec un jeu de coulissement prédéterminé dans la direction de déplacement de la tige de commande (9).

10. Equilibreuse selon la revendication 8 ou la revendication 9, caractérisée en ce que le premier moyen élastique (19) précontraint est solidaire en rotation de l'arbre d'entraînement (10) en rotation et entre les deux paliers (3a, 3b) espacés solidaires de la platine (1).
